# EUROPEAN PATENT APPLICATION

(11) **EP 4 261 048 A1**
(43) Date of publication of application: **18.10.2023**
(21) Application number: 23167215.5
(22) Date of filing: 07.04.2023
(51) Int. Cl.: B60C 1/00, C08L 15/00

(54) **RUBBER COMPOSITION AND TIRE**

(30) Priority: 12.04.2022 US 202263362836 P; 13.01.2023 US 202318154391
(71) Applicant: The Goodyear Tire & Rubber Company, Akron, OH 44316 (US)
(72) Inventor: ENGELDINGER, Eric, L-8508 Rédange/Attert (LU)
(74) Representative: Kutsch, Bernd

(57) **Abstract**

A sulfur vulcanizable rubber composition is disclosed comprising: 50 phr to 100 phr of at least one styrene butadiene rubber functionalized for the coupling to silica; 0 phr to 50 phr of a diene based elastomer; 40 phr to 200 phr of a filler, wherein said filler comprises predominantly a silanized or pre-silanized silica; and at least 0.5 phr of a sulfur-containing compound having the structure 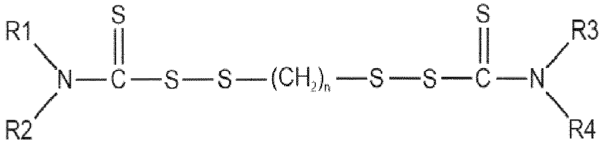 with n being an integer from 1 to 15 and with R1, R2, R3, R4 each being independently an organic group comprising 1 to 20 carbon atoms. Also, a tire comprising such a rubber composition is disclosed.

## Description

### Field of the Invention

This invention relates to a vulcanizable or a vulcanized rubber composition, in particular for a tire or one of its rubber components. Moreover, the present invention is directed to a tire or a rubber component of a tire comprising such a rubber composition.

### Background of the Invention

In view of a continuing demand for improved tire performance, new material combinations are constantly being evaluated and tested by tire manufacturers. In particular, there is a need to reduce hysteresis / rolling resistance properties of tires for a reduced fuel consumption. However, in some approaches improving these properties it has been found difficult to obtain at the same time desirable stiffness properties. There is thus a need to provide new rubber compositions for tires which provide good stiffness, rolling resistance properties, and preferably a limited abrasion.

### Summary of the Invention

The invention relates to a rubber composition in accordance with claim 1, to a rubber component in accordance we claim 13, to a tire in accordance with claim 14 and to a method in accordance with claim 15.

Dependent claims refer to preferred embodiments of the invention.

A first object of the present invention is to provide a rubber composition having desirable rolling resistance and/or hysteresis properties.

Another object of the present invention is to provide a rubber composition with good stiffness.

Another object of the present invention is to provide a rubber composition with limited abrasion.

Yet another object of the present invention is to provide a rubber composition exhibiting a good compromise of hysteresis, stiffness and abrasion properties.

Thus, in a first aspect, the present invention is directed to a sulfur vulcanizable rubber composition (or alternatively to a vulcanized rubber composition) comprising 50 phr to 100 phr of at least one styrene butadiene rubber functionalized for the coupling to silica, 0 phr to 50 phr of a diene based elastomer, 40 phr to 200 phr of filler, wherein said filler comprises predominantly a silanized or pre-silanized silica. Furthermore, the rubber composition comprises at least 0.5 phr of a (sulfur-containing) compound having the structure 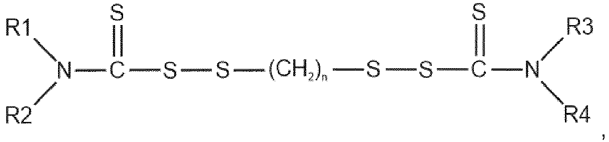 with n being an integer from 1 to 15, and with R1, R2, R3, R4 being each independently an organic group comprising 1 to 20 carbon atoms. In other words, each of R1 to R4 may be an organic group comprising 1 to 20 carbon atoms, wherein each group of R1 to R4 can be different from another group of R1 to R4.

The inventors have surprisingly found that the combination of polymers functionalized for the coupling to silica together with a silanized or pre-silanized silica and the above compound results in a rubber composition having a good rolling resistance and in addition an unexpectedly high stiffness. While the use of silanized or pre-silanized silicas may have resulted in the improvement of rolling resistance in some compositions in the past, stiffness was reduced at the same time. By the combination of features according to the present invention, the latter drawback has unexpectedly been overcome.

In a preferred embodiment, said silanized or pre-silanized silica is a silica which is reacted or pre-reacted with a sulfur-containing silane.

Pre-reaction with the silane or in other words pre-silanization improves the dispersion of the silica in the rubber composition and is thus technically different from a silanization in the rubber composition. Hence, the silica is preferably a pre-silanized silica.

In another preferred embodiment, the sulfur-containing silane is one or more of i) a bis(3-triethoxysilylpropyl)polysulfide containing an average of from 2 to 5 connecting sulfur atoms in its polysulfidic bridge, and ii) an alkoxyorganomercaptosilane. Such silanes have been found to be the most preferred agents. For example, see United States Patent 7,214,731, showing further details of making such pre-silanized silica.

The amount of mercapto groups on the surface of the silica may be in the range of between 0.1 and 1 weight percent, alternatively 0.4 to 1 weight percent or 0.4 to 0.6 weight percent, wherein 100% represent the whole weight of the silica sample. The amount of mercapto groups is measured by titration.

In addition to mercapto groups coupled to the silica, the silica may comprise a compatibilizer which is typically a (hydro-)carbon chain material having multiple carbon atoms (for instance at least 4 carbon atoms) along its chain. Such a compatibilizer may facilitate the mixing of the composition. In an example, the weight % of carbon surface load / functionalization is between 2 and 10, or alternatively between 3 and 8. Again, this is based on 100% of the silica sample, by weight.

In still another embodiment, the pre-silanized silica has a BET surface area smaller than 150 g/m², preferably smaller than 120 g/m², even more preferably at most 100 g/m².

In still another embodiment, the pre-silanized silica has a BET surface area within a range of 50 g/m² to 100 g/m². A low silica surface area improves dispersion and low hysteresis (but results also in lower stiffness).

Such a BET surface area is measured herein by Nitrogen adsorption according to ASTM D6556 or equivalent. The BET method of measuring surface area is also described, for example, in the Journal of the American Chemical Society, Volume 60.

In still another embodiment, the pre-silanized (and optionally precipitated) silica has a CTAB adsorption surface area of between 130 m²/g and 210 m²/g, optionally between 130 m²/g and 150 m²/g. The CTAB (cetyl trimethyl ammonium bromide) method for determination of the silica surface area according to ASTM D6845 is known to the person skilled in the art.

The pre-silanized silica may optionally be treated with a silica dispersing aid. Such silica dispersing aids may include glycols, such as fatty acids, diethylene glycols, polyethylene glycols, fatty acid esters of hydrogenated or non-hydrogenated C₅ or C₆ sugars, and polyoxyethylene derivatives of fatty acid esters of hydrogenated or non-hydrogenated C₅ or C₆ sugars. Exemplary fatty acids include stearic acid, palmitic acid and oleic acid. Exemplary fatty acid esters of hydrogenated and non-hydrogenated C₅ and C₆ sugars (e.g., sorbose, mannose, and arabinose) include the sorbitan oleates, such as sorbitan monooleate, dioleate, trioleate and sesquioleate, as well as sorbitan esters of laurate, palmitate and stearate fatty acids. Exemplary polyoxyethylene derivatives of fatty acid esters of hydrogenated and non-hydrogenated C₅ and C₆ sugars include polysorbates and polyoxyethylene sorbitan esters, which are analogous to the fatty acid esters of hydrogenated and non-hydrogenated sugars noted above except that ethylene oxide groups are placed on each of the hydroxyl groups.

The optional silica dispersing aids, if used, are present in an amount ranging from 0.1% to 25% by weight based on the weight of the silica, with 0.5% to 20% by weight being suitable, and 1% to 15% by weight based on the weight of the silica also being suitable.

In another embodiment, the pre-silanized silica is pre-hydrophobated by treating silica in an aqueous colloidal form thereof with both an organomercaptosilane and an alkylsilane in a weight ratio of said organomercaptosilane to said alkylsilane in a range of from 10/90 to 90/10; wherein said alkylsilane is of the general Formula (I):

Xₙ-Si-R₄₋ₙ (I),

wherein R is an alkyl radical having from 1 to 18 carbon atoms, preferably from 1 to 8 carbon atoms, such as, methyl, ethyl, isopropyl, n-butyl and octadecyl radicals, n is a numeral from 1 to 3 and X is a radical selected from halogens, namely chlorine or bromine, preferably a chlorine radical, and alkoxy radicals, preferably an alkoxy radical as (R¹O)-, wherein R¹ is an alkyl radical having from 1 to 3 carbon atoms, such as, methyl, ethyl and isopropyl radicals, preferably from methyl and ethyl radicals, and where said organomercaptosilane is of the general formula (II):

(X)ₙ(R²O)₃₋ₙ-Si-R³-SH (II),

wherein X is a radical selected from halogens, such as chlorine or bromine, preferably a chlorine radical, and alkyl radicals having from 1 to 16 carbon atoms, preferably selected from methyl, ethyl, n-propyl, and n-butyl radicals; wherein R² is an alkyl radical having from 1 to 16 carbon atom, preferably from 1 to 4 carbon atoms, preferably selected from methyl and ethyl radicals and R³ is an alkylene radical having from 1 to 16 carbon atoms, preferably from 1 to 4 carbon atoms, preferably a propylene radical; wherein n represents an integer from 0 to 3 with n preferably representing zero. Representative alkylsilanes of Formula (I) are, for example, trichloro methyl silane, dichloro dimethyl silane, chloro trimethyl silane, trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, and diethoxy dimethyl silane. Representative organomercaptosilanes of Formula (II) are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

Some examples of pre-silanized silicas which are suitable for use in the practice of this invention include Ciptane^{®} 255 LD and Ciptane^{®} LP (PPG Industries) silicas that have been pre-treated with a mercaptosilane, and Coupsil^{®} 8113 (Degussa) that is the product of the reaction between organosilane Bis(triethoxysilylpropyl) polysulfide (Si69) and Ultrasil^{®} VN3 silica, and Coupsil^{®} 6508, Agilon^{®} 400 silica from PPG Industries, Agilon^{®} 454 silica from PPG Industries, and Agilon^{®} 458 silica from PPG Industries.

In a preferred embodiment, the rubber composition is exclusive of non-pre-silanized silica or comprises less than 10 phr, preferably less than 5 phr of non-pre-silanized silica.

In general, the pre-silanized silica is not necessarily pre-silanized precipitated silica herein but is preferably pre-silanized precipitated silica.

In a preferred embodiment, the rubber composition may also include (non-pre-silanized/conventional) silica which is optionally precipitated silica. In one embodiment, its BET surface area may be in the range of 40 to 600 square meters per gram. In another embodiment, the BET surface area may be in a range of 80 to 300 square meters per gram. The conventional silica may also be characterized by having a dibutylphthalate (DBP) absorption value in a range of 100 to 400, alternatively 150 to 300. A conventional silica might be expected to have an average ultimate particle size, for example, in the range of 0.01 to 0.05 micron as determined by the electron microscope, although the silica particles may be even smaller, or possibly larger, in size. Various commercially available silicas may be used, such as, only for example herein, and without limitation, silicas commercially available from PPG Industries under the Hi-Sil trademark with designations 210, 315G and EZ160G; silicas available from Solvay, with, for example, designations of Z1165MP and Premium200MP; and silicas available from Evonik AG with, for example, designations VN2 and Ultrasil 6000GR or 9100GR.

In one embodiment, where the rubber composition contains conventional/non-pre-silanized silica (in addition to said pre-silanized silica), said rubber composition contains added silica coupler (silica coupler added to said rubber composition), wherein said silica coupler has a moiety reactive with hydroxyl groups (e.g. silanol groups) on said silica and said pre-silanized silica and another different moiety interactive with the elastomers of the rubber composition. In one embodiment, said silica coupler added to said rubber composition is comprised of bis(3-triethoxysilylpropyl) polysulfide having an average of from 2 to 4 connecting sulfur atoms in its polysulfidic bridge.

Representatives of the aforesaid silica coupler (or in other words silica coupling agent) having a moiety reactive with hydroxyl groups on pre-silanized silica and on silica and another moiety interactive with said elastomers, may be comprised of, for example: (A) bis(3-trialkoxysilylalkyl) polysulfide containing an average in range of from 2 to 4, alternatively from 2 to 2.6 or from 3.2 to 3.8, sulfur atoms in its connecting bridge, or (B) an alkoxyorganomercaptosilane, or (C) their combination. A representative of such bis(3-trialkoxysilylalkyl) polysulfide is comprised of bis(3-triethoxysilylpropyl) polysulfide. As indicated, for the pre-silanized precipitated silica, the silica coupler may be desirably an alkoxyorganomercaptosilane. For the non-pre-silanized silica, the silica coupler may be desirably comprised of the bis(3-triethoxysilylpropyl) polysulfide.

In a preferred embodiment, the rubber composition may contain a conventional sulfur containing organosilicon compounds or silanes. Examples of suitable sulfur containing organosilicon compounds are of the formula:

Z - Alk - Sₙ - Alk - Z I

in which Z is selected from the group consisting of 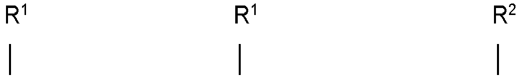 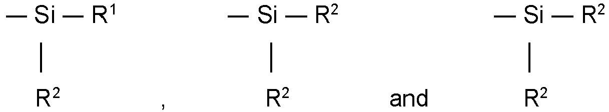 where R¹ is an alkyl group of 1 to 4 carbon atoms, cyclohexyl or phenyl; R² is an alkoxy of 1 to 8 carbon atoms, or cycloalkoxy of 5 to 8 carbon atoms; Alk is a divalent hydrocarbon of 1 to 18 carbon atoms and n is an integer of 2 to 8. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 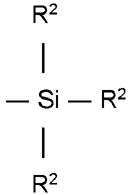 where R² is an alkoxy of 2 to 4 carbon atoms, alternatively 2 carbon atoms; Alk is a divalent hydrocarbon of 2 to 4 carbon atoms, alternatively with 3 carbon atoms; and n is an integer of from 2 to 5, alternatively 2 or 4. In another embodiment, suitable sulfur containing organosilicon compounds include compounds disclosed in United States Patent 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials. In another embodiment, suitable sulfur containing organosilicon compounds include those disclosed in United States Patent Publication No. 2003/0130535. In one embodiment, the sulfur containing organosilicon compound is Si-363 from Degussa. The amount of the sulfur containing organosilicon compound in a rubber composition may vary depending on the level of other additives that are used. Generally speaking, the amount of the compound may range from 0.5 phr to 20 phr. In one embodiment, the amount will range from 1 phr to 10 phr.

In one embodiment, the rubber composition is exclusive of a separate silica coupler, i.e., a silica coupler added separately to the rubber composition.

In still another embodiment, said filler comprises at least 50 phr of silica, preferably from 50 phr to 160 phr of silica, wherein the silica comprises predominantly pre-silanized silica (all by weight) or consists of pre-silanized silica.

In still another embodiment, said filler comprises from 45 phr of the pre-silanized silica to 150 phr of the pre-silanized silica, preferably from 60 phr to 150 phr such as for passenger car tire (tread) applications.

In still another embodiment, said filler comprises from 25 phr to 60 phr of the pre-silanized silica. Such a range has been found to be of particular interest for truck tire (tread) applications.

In still another embodiment, the filler comprises from 50 phr to 150 phr (preferably from 50 phr to 100 phr, or even more preferably from 50 phr to 85 phr) of the pre-silanized silica. In particular, the present invention could be of interest for moderately filled rubber compositions.

In yet another embodiment, the filler comprises less than 10 phr of carbon black. Such a relatively low carbon black content is deemed desirable to further improve hysteresis properties.

In still another embodiment said filler comprises less than 25 phr of carbon black, preferably less than 10 phr of carbon black, or even more preferably less than 5 phr of carbon black.

In another preferred embodiment, the rubber composition comprises at most 10 phr of liquid plasticizers, preferably at most 7 phr of liquid plasticizers. A limited amount of liquid plasticizers has been found to be preferable by the inventors. Liquid plasticizer means herein a plasticizer which is in a liquid state at 23°C.

In another preferred embodiment, the rubber composition comprises less than 10 phr of oil, preferably less than 7 phr of oil. It may also comprise at most 5 phr of oil or be essentially or entirely free of oil.

In yet another embodiment, the rubber composition comprises from 0.5 phr to 5 phr (preferably from 1 phr to 4 phr, or even more preferably from 1 phr to 2.5 phr) of the sulfur-containing compound. An even more preferred range is 1 phr to 2 phr, or most preferably 1 phr to 1.7 phr of the sulfur-containing compound. Already relatively small amounts may be sufficient to obtain the desired effect.

In still another embodiment, one or more of R1, R2, R3, R4 comprise (or consist of) a cyclic, e.g., a benzyl group.

In still another embodiment, said sulfur-containing compound has the following structure:

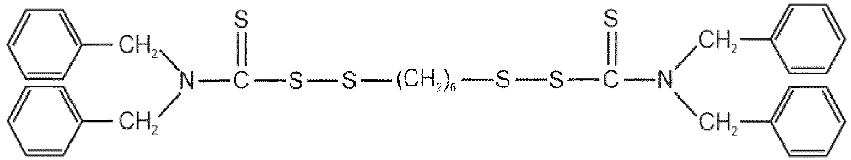

In still another embodiment, said sulfur-containing compound is an 1,6-bis(N,N-dibenzylthiocarbamoyldithio)alkane, preferably 1,6-bis(N,N-dibenzylthiocarbamoyldithio)hexane.

In still another embodiment, the rubber composition comprises at least 5 phr of a hydrocarbon resin, preferably a plasticizing hydrocarbon resin.

In another embodiment, said resin is chosen from the list of coumarone-indene-resins, petroleum resins, (aliphatic) C5 resins, (aromatic) C9 resins, C5/C9 resins, DCPD resins, CPD resins, MCPD resins, terpene resins, alphamethyl styrene resins, and combinations of those. Optionally, such resins could also be functionalized and/or at least partially hydrogenated.

In another embodiment, a glass transition temperature of the resin is within a range of 30°C to 80°C, preferably 40°C to 80°C. A glass transition temperature of a resin is determined herein as a peak midpoint by a differential scanning calorimeter (DSC) at a temperature rate of increase of 10°C per minute, according to ASTM D6604 or equivalent.

In another embodiment, the resin has a softening point of at least 95°C as determined according to ASTM E28, or equivalent, which might sometimes be referred to as a ring and ball softening point. Preferably, the softening point is at most 140°C or more preferably at most 120°C.

In yet another embodiment, the resin has an average molecular weight Mw within a range of 150 g/mol to 3000 g/mol, preferably 500 g/mol to 2500 g/mol. Mw is determined with gel permeation chromatography (GPC) using polystyrene calibration standards according to ASTM 5296-11 or equivalent.

In still another embodiment, the styrene butadiene rubber has one or more of: i) a styrene content of less than 40% (and preferably more than 5%), and ii) a vinyl content within a range of 30% to 60% (preferably 35% to 55%), iii) a glass transition temperature within a range of -10°C to -40°C (preferably -15°C to - 35°C). The relatively high glass transition temperature range can for instance be of particular interest in polymer blends with other low glass transition temperature polymers to obtain a relatively high rubber compound glass transition temperature.

In another embodiment, the styrene butadiene rubber is a solution-polymerized styrene butadiene rubber. This is the preferred styrene butadiene rubber used herein.

In yet another embodiment, the rubber composition comprises less than 0.9 phr of sulfur (or, in other words, elemental sulfur, which is for instance added as pure sulfur to the rubber composition), preferably less than 0.7 phr of sulfur. Preferably, the rubber composition comprises more than 0.2 phr of sulfur, or even more preferably more than 0.3 phr of sulfur. In particular, this is desirable in combination with the sulfur containing compound according to the present invention. In particular, elemental sulfur or pure sulfur shall be understood herein as sulfur which is not bound in a silane or an accelerator.

In another embodiment, the styrene butadiene rubber has a weight average molecular weight (Mw) within a range of 200,000 g/mol to 500,000 g/mol. Lower molecular weights are less desirable as those may increase hysteresis. Higher molecular weights are less desirable as they limit processability.

A weight average molecular weight Mw is determined using gel permeation chromatography (GPC) according to ASTM 5296-11 using polystyrene calibration standards.

In still another embodiment the styrene butadiene rubber functionalized for the coupling to silica has at least one amino group, preferably at least one amino silane or at least one amino siloxane group.

In still another embodiment, the styrene butadiene rubber functionalized for the coupling to silica has at least at 85% (preferably at 90%) of its chain ends at least one functional group, preferably at least one of the groups as mentioned herein above.

In still another embodiment, the rubber composition comprises 70 phr to 100 phr of the styrene butadiene rubber, and 0 phr to 30 phr of one or more of polybutadiene rubber, polyisoprene, and natural rubber.

In yet another embodiment the rubber composition comprises 70 phr to 100 phr of two styrene butadiene rubbers functionalized for the coupling to silica and 0 phr to 30 phr of one or more of polybutadiene rubber, polyisoprene, and natural rubber. The two styrene butadiene rubbers could have different glass transition temperatures such as below -50°C and above - 50°C.

In still another embodiment, the rubber composition further comprises at least 0.2 phr of vulcanizing agents, preferably comprising elemental sulfur. For instance, the composition may comprise from 0.4 phr to 15 phr of vulcanizing agents which may comprise elemental sulfur or sulfur containing silanes.

In an embodiment, the rubber composition may include at least one and/or one additional diene-based rubber. Representative synthetic polymers may be the homopolymerization products of butadiene and its homologues and derivatives, for example, methyl butadiene, dimethylbutadiene and pentadiene as well as copolymers such as those formed from butadiene or its homologues or derivatives with other unsaturated monomers. Among the latter may be acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis 1,4-polybutadiene), polyisoprene (including cis 1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. Preferred rubber or elastomers may be in general natural rubber, synthetic polyisoprene, polybutadiene and SBR including SSBR. One or more of these rubbers may be functionalized, such as for the coupling to silica.

In another embodiment, the composition may comprise at least two diene-based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers. In some embodiments, the partially saturated elastomer may also be a diene-based polymer but it is not necessarily diene-based.

In another embodiment, an emulsion polymerization derived styrene/butadiene (ESBR) might be used having a styrene content of 20 to 35 percent bound styrene or, for some applications, an ESBR having a medium to relatively high bound styrene content, namely a bound styrene content of 30 to 45 percent. By emulsion polymerization prepared ESBR, it may be meant that styrene and 1,3-butadiene are copolymerized as an aqueous emulsion. Such are well known to those skilled in such art. The bound styrene content can vary, for example, from 5 to 50 percent. In one aspect, the ESBR may also contain acrylonitrile to form a terpolymer rubber, as ESBR, in amounts, for example, of 2 to 30 weight percent bound acrylonitrile in the terpolymer. Emulsion polymerization prepared styrene/butadiene/acrylonitrile copolymer rubbers containing 2 to 40 weight percent bound acrylonitrile in the copolymer may also be contemplated as diene-based rubbers.

In another embodiment, solution polymerization prepared styrene butadiene rubber (SSBR) may be used. Such an SSBR may for instance have a bound styrene content in a range of 5 to 50 percent, preferably 9 to 36, percent. The SSBR can be conveniently prepared, for example, by anionic polymerization in an inert organic solvent. More specifically, the SSBR can be synthesized by copolymerizing styrene and 1,3-butadiene monomer in a hydrocarbon solvent utilizing an organo lithium compound as the initiator. As noted above, such a rubber may also be functionalized for the coupling to silica.

In one embodiment, a synthetic or natural polyisoprene rubber may be used. Synthetic cis 1,4-polyisoprene and cis 1,4-polyisoprene natural rubber are as such well known to those having skill in the rubber art. In particular, the cis 1,4-content may be at least 90%, optionally at least 95%.

In one embodiment, cis 1,4-polybutadiene rubber (BR or PBD) is used. Suitable polybutadiene rubbers may be prepared, for example, by organic solution polymerization of 1,3-butadiene. The BR may be conveniently characterized, for example, by having at least a 90 percent cis 1,4-content ("high cis" content) and a glass transition temperature Tg in a range of from -95°C to -110°C. Suitable polybutadiene rubbers are available commercially, such as Budene^{®} 1207, Budene^{®} 1208, Budene^{®} 1223, or Budene^{®} 1280 from The Goodyear Tire & Rubber Company. These high cis-1,4-polybutadiene rubbers can for instance be synthesized utilizing nickel catalyst systems which include a mixture of (1) an organonickel compound, (2) an organoaluminum compound, and (3) a fluorine containing compound as described in United States Patent 5,698,643 and United States Patent 5,451,646.

A glass transition temperature, or Tg, of an elastomer or rubber represents the glass transition temperature(s) of the respective elastomer or rubber in its uncured state. A glass transition temperature, or Tg, of an elastomer composition or a rubber composition represents the glass transition temperatures of the respective elastomer composition or rubber composition in its cured state. A Tg is determined as a peak midpoint by a differential scanning calorimeter (DSC) at a temperature rate of increase of 10°C per minute, according to ASTM D3418.

The term "phr" as used herein, and according to conventional practice, refers to "parts by weight of a respective material per 100 parts by weight of rubber, or elastomer". In general, using this convention, an rubber composition is comprised of 100 parts by weight of rubber/elastomer. The claimed composition may comprise other rubbers / elastomers than explicitly mentioned in the claims, provided that the phr value of the claimed rubbers / elastomers is in accordance with claimed phr ranges and the amount of all rubbers / elastomers in the composition results in total in 100 parts of rubber. In an example, the composition may further comprise from 1 phr to 10 phr, optionally from 1 phr to 5 phr, of one or more additional diene-based rubbers, such as SBR, SSBR, ESBR, PBD/BR, NR and/or synthetic polyisoprene. In another example, the composition may include less than 5, preferably less than 3, phr of an additional diene-based rubber or be also essentially free of such an additional diene-based rubber. The terms "rubber" and "elastomer" may be used herein interchangeably, unless indicated otherwise.

In an embodiment, the rubber composition may also include oil, in particular processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding.

Suitable process oils may include various oils as are known in the art, including aromatic, paraffinic, naphthenic, vegetable oils, and low PCA oils, such as MES, TDAE, SRAE and heavy naphthenic oils. Suitable low PCA oils may include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

In an embodiment, the rubber composition may include also carbon black as one of the filler materials. Preferred amounts in this application range from 0.5 phr to 25 phr, preferably from 0.5 phr to 10 phr or from 0.5 phr to 5 phr. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991 grades. These carbon blacks have iodine absorptions ranging from 9 g/kg to 145 g/kg and a DBP number ranging from 34 cm³/100 g to 150 cm³/100 g.

In another embodiment, other fillers may be used in the rubber composition including particulate fillers including ultra-high molecular weight polyethylene (UHMWPE), crosslinked particulate polymer gels including those disclosed in United States Patent No. 6,242,534, United States Patent No. 6,207,757, United States Patent No. 6,133,364, United States Patent No. 6,372,857, United States Patent No. 5,395,891 or United States Patent No. 6,127,488, and a plasticized starch composite filler including that disclosed in United States Patent No. 5,672,639. Such other fillers may be used in an amount ranging from 1 phr to 10 phr.

It is readily understood by those having skill in the art that the rubber composition may be compounded by methods generally known in the rubber compounding art, such as mixing the various sulfur-vulcanizable constituent rubbers with various commonly used additive materials such as, for example, sulfur donors, curing aids, such as activators and retarders, and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may for instance be used in an amount ranging from 0.5 phr to 8 phr, alternatively within a range of from 1.5 phr to 6 phr. Typical amounts of tackifier resins, if used, comprise for example 0.5 phr to 10 phr, usually 1 phr to 5 phr. Typical amounts of processing aids, if used, comprise for example 1 phr to 50 phr (this may comprise in particular oil). Typical amounts of antioxidants, if used, may for example comprise 1 phr to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, if used, may for instance comprise 1 phr to 5 phr. Typical amounts of fatty acids, if used, which can include stearic acid, may for instance comprise 0.5 phr to 3 phr. Typical amounts of waxes, if used, may for example comprise 1 phr to 5 phr. Often microcrystalline waxes are used. Typical amounts of peptizers, if used, may for instance comprise 0.1 phr to 1 phr. Typical peptizers may be, for example, pentachlorothiophenol and dibenzamidodiphenyl disulfide.

Accelerators may be preferably but not necessarily used to control the time and/or temperature required for vulcanization and to improve the properties of the vulcanizate. In one embodiment, a single accelerator system may be used, i.e. primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients may be typically mixed in at least two stages, namely, at least one nonproductive stage followed by a productive mix stage. The final curatives including sulfur-vulcanizing agents may be typically mixed in the final stage which is conventionally called the "productive" mix stage in which the mixing typically occurs at a temperature, or ultimate temperature, lower than the mix temperature(s) of the preceding nonproductive mix stage(s). In an embodiment, the rubber composition may be subjected to a thermomechanical mixing step. The thermomechanical mixing step generally comprises a mechanical working in a mixer or extruder for a period of time, for example suitable to produce a rubber temperature which is within the range of 140°C to 190°C. The appropriate duration of the thermomechanical working varies as a function of the operating conditions, and the volume and nature of the components. For example, the thermomechanical working may be from 1 to 20 minutes.

In a second aspect of the present invention, a vulcanized rubber composition is provided, which is based on the rubber composition according to the first aspect of the present invention. In other words, the vulcanized rubber composition is the vulcanization product of the sulfur vulcanizable rubber composition according to the first aspect of the invention and/or one or more of its embodiments.

In a third aspect of the invention, a rubber component, preferably a rubber component for a tire, is provided, in particular comprising the rubber composition in accordance with the first aspect of the invention, or in accordance with the second aspect of the invention, and/or one or more of their embodiments. Thus, the tire may be an uncured tire or cured, i.e., a vulcanized, tire.

In a fourth aspect of the invention, a tire is provided, wherein the tire comprises the rubber composition according to the first aspect or second aspect of the invention, or has a rubber component according to the third aspect of the invention.

In a preferred embodiment, the tire comprises a tread, preferably a tread cap, comprising the rubber composition. In another embodiment, the tire has a radially outer tread cap layer, intended to come into contact with the road when driving, comprising the rubber composition.

The tire of the present invention may for example be a pneumatic tire or non-pneumatic tire, a race tire, a passenger tire, an aircraft tire, an agricultural tire, an earthmover tire, an off-the-road (OTR) tire, a truck tire or a motorcycle tire. The tire may also be a radial or bias tire.

Vulcanization of the pneumatic tire may for instance be carried out at conventional temperatures which is within the range of 100°C to 200°C. In one embodiment, the vulcanization is conducted at temperatures which are within the range of 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

Moreover, in a fifth aspect, the present invention is directed to a method of making a rubber composition (e.g., the rubber composition as described in the aforementioned aspects), the method comprising one or more of the following steps:
i) silanizing silica with at least one silane so as to obtain a silanized (or in other words pre-silanized) silica;
ii) adding the silanized silica to at least one styrene butadiene rubber functionalized for the coupling to silica, and optionally at least one further diene based elastomer;
iii) mixing the silanized silica with the at least one styrene butadiene rubber functionalized for the coupling to silica, and optionally the further diene based elastomer;
iv) adding one or more of plasticizers (such as resin and/or oil), processing aids, antidegradants, waxes;
v) adding elemental sulfur, optionally at least one (sulfur cure) accelerator, and the said sulfur-containing compound.

In a sixth aspect, the present invention is directed to a method of manufacturing a tire, preferably with the composition according to an aforementioned aspect and/or made with the method of making the rubber composition according to the fifth aspect, wherein the method of manufacturing the tire comprises:
a) forming at least a part of a rubber component (or a rubber component) with the vulcanizable rubber composition;
b) assembling the tire, including the rubber component;
c) curing the tire having the rubber component to obtain a cured tire.

Multiple features of the aspects and embodiments mentioned herein may be combined with one another.

### Detailed Description of Preferred Embodiments of the Invention

Below Table 1 shows two Comparative rubber compositions which are not in accordance with the present invention. Comparative Example 1 shows a rubber composition which comprises the same diene-based rubber matrix as Comparative Example 2. Most ingredients of both compositions are the same. However, Comparative Example 1 has 80 phr of conventional silica together with 7 phr of added Silane 1, whereas Comparative Example 2 has 90 phr of pre-silanized silica. Moreover, Comparative Example 1 comprises 10 phr of oil whereas Comparative Example 2 comprises 5 phr of oil. For example, these two Comparative Examples show that typically the use of pre-silanized silica instead of comparable amounts of conventional, i.e. non-pre-silanized silica decreases the compound stiffness as further shown herein in below Table 2.

**TABLE 1**

| | **Amounts in phr** | |
|---|---|---|
| **Ingredient** | **Comparative Example 1** | **Comparative Example 2** |
| SSBR 1¹ | 80 | 80 |
| PBD 1² | 20 | 20 |
| Resin 1³ | 7 | 7 |
| Waxes | 1.5 | 1.5 |
| Oil⁴ | 10 | 5 |
| Processing aids⁵ | 3 | 3 |
| Stearic Acid | 3 | 3 |
| Silica⁶ | 80 | 0 |
| Pre-silanized silica⁷ | 0 | 90 |
| Silane 1⁸ | 7 | 0 |
| Zinc Oxide | 2.5 | 2.5 |
| Sulfur | 1.3 | 1.3 |
| Antidegradants⁹ | 3 | 3 |
| DPG¹⁰ | 2.9 | 0 |
| CBS¹¹ | 2.3 | 2.3 |
| Silane 2 on carbon black carrier¹² | 2 | 2 |

| | | |
|---|---|---|
| ¹ Solution polymerized styrene butadiene rubber as SLR-4602 from Trinseo ² Polybutadiene rubber as Budene^{™} 1223 from Goodyear ³ Polyterpene resin as Sylvatraxx^{™} 4150 from Arizona Chemical ⁴ TDAE oil ⁵ including glycerine monoesters of stearic acid and zinc soaps of fatty acids ⁶ Precipitated silica as Zeosil^{™} Premium 200MP from Solvay ⁷ Pre-silanized, precipitated silica as Agilon^{™} 400 from PPG Industries ⁸ Bis-triethoxysilylpropyl disulfide as SI266^{™} from Evonik ⁹ based on phenylenediamines ¹⁰ Diphenylguanidine (accelerator) ¹¹ N-cyclohexyl-2-benzothiazolesulfenamide (accelerator) ¹² 50% bis-triethoxysilylpropyl tetrasulfide on 50% N330 carbon black carrier, as X50S from Evonik | | |

**TABLE 2**

| **Property** | **Comparative Example 1** | **Comparative Example 2** |
|---|---|---|
| G'(1%), 1 Hz [MPa] ^{a} | 2.2 | 1.5 |
| Tangent Delta (6%), 30°C ^{b} | 0.22 | 0.19 |

| | | |
|---|---|---|
| ^{a} G' has been obtained with an RPA 2000^{™} Rubber Process Analyzer of the company Alpha Technologies, based on ASTM D5289, at a strain of 1% and 100°C, a frequency of 1 Hz ^{b} Tangent Delta has been obtained by a Metravib^{™} instrument at 6% strain and 7.8 Hz based on ISO 4664, DIN 53513, or equivalent at a temperature of 30°C | | |

It is observed that the stiffness of Comparative Example 2 is considerably smaller than the stiffness of Comparative Example 1 as shown by the about 35% drop in stiffness. That drop is even more remarkable as the composition of Comparative Example 2 has already an increased content of silica, wherein more filler typically also increases the stiffness of the composition. Even more, Comparative Example 2 has 5 phr less oil than Comparative Example 1 which typically also increases the compound stiffness. According to a non-binding theory of the inventors, the pre-silanized silica may disperse better in the rubber composition which could result in a reduced stiffness.

Furthermore, Tangent Delta is improved by the use of the pre-silanized silica by about 14%. Tangent Delta can be considered as a hysteresis indicator so that its reduction indicates a reduced hysteresis and thus rolling resistance if the rubber composition is used in a tire. While the above-described improvement in Tangent Delta is desirable, the significant drop in stiffness may for instance be undesirable from many performance oriented tire applications.

Table 3 comprises further Comparative Examples, which are not in accordance with the present invention, as well as Inventive Examples 1 and 2, which are embodiments in accordance with the present invention. All Examples of Table 3 comprise solution-polymerized styrene-butadiene rubbers which are functionalized for the coupling to silica together with a polybutadiene rubber. Moreover, Comparative Example 4, Inventive Example 1 and Inventive Example 2 comprise pre-silanized silica, whereas Comparative Example 3 comprises conventional silica. Both Inventive Examples comprise further a sulfur-containing compound of the structure 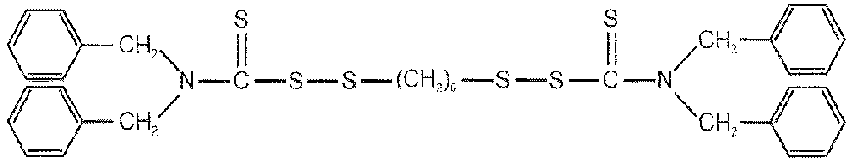 wherein Inventive Example 1 comprises a smaller amount of the compound and Inventive Example 2 comprises a larger amount. All Examples of Table 3 comprise a plasticizing resin.

**TABLE 3**

| | **Amounts in phr** | | | |
|---|---|---|---|---|
| **Ingredient** | **Comparative Example 3** | **Comparative Example 4** | **Inventive Example 1** | **Inventive Example 2** |
| SSBR 2¹³ or SSBR 3¹⁴ | 80 | 80 | 80 | 80 |
| PBD 1² | 20 | 20 | 20 | 20 |
| Resin 1³ | 7 | 7 | 7 | 7 |
| Waxes | 1.5 | 1.5 | 1.5 | 1.5 |
| Oil⁴ | 10 | 5 | 5 | 5 |
| Stearic Acid | 3 | 3 | 1 | 1 |
| Silica⁶ | 80 | 0 | 0 | 0 |
| Pre-silanized silica⁷ | 0 | 90 | 90 | 90 |
| Silane 1⁸ | 7 | 0 | 0 | 0 |
| Zinc Oxide | 2.5 | 2.5 | 1 | 1 |
| Processing aids⁵ | 3 | 3 | 2 | 3 |
| Sulfur | 1.2 | 1.2 | 0.55 | 0.55 |
| Antidegradants⁹ | 3 | 5.2 | 5.2 | 5.2 |
| DPG¹⁰ | 2.9 | 0 | 0 | 0 |
| CBS¹¹ | 2.3 | 2.3 | 1.3 | 1.5 |
| Sulfur-containing compound¹⁵ | 0 | 0 | 1.4 | 1.7 |
| Silane 2 on carbon black carrier¹² | 2 | 2 | 2 | 2 |

| | | | | |
|---|---|---|---|---|
| ¹³ Solution polymerized styrene butadiene rubber functionalized for the coupling to silica having a glass transition temperature of -25°C, a bound styrene content of 28% and a vinyl content of 42% (RHC) ¹⁴ Solution polymerized styrene butadiene rubber functionalized for the coupling to silica having a glass transition temperature of -25°C, a bound styrene content of 21% and a vinyl content of 50% (RHC) ¹⁵ BDBzTH as Vulcuren^{™} from Rhein Chemie / Lanxess | | | | |

As shown in Table 4 below, stiffness, Tangent Delta and abrasion have been determined for the compositions with SSBR 2 as listed in Table 1.

**TABLE 4**

| **Properties with SSBR 2** | **Comparative Example 3** | **Comparative Example 4** | **Inventive Example 1** | **Inventive Example 2** |
|---|---|---|---|---|
| G'(1%), 1 Hz [MPa] ^{a} | 1.76 | 1.38 | 1.86 | 1.83 |
| Tangent Delta (6%), 30°C ^{b} | 0.18 | 0.16 | 0.15 | 0.14 |
| Abrasion [mm³] ^{c} | 112 | 101 | 79 | 94 |

| | | | | |
|---|---|---|---|---|
| ^{a} G' has been obtained with an RPA 2000^{™} Rubber Process Analyzer of the company Alpha Technologies, based on ASTM D5289, at a strain of 1%, a temperature of 100°C, a frequency of 1 Hz ^{b} Tangent Delta has been obtained by a Metravib^{™} instrument at 6% strain and 7.8 Hz based on ISO 4664, DIN 53513, or equivalent at a temperature of 30°C ^{c} DIN 53516 abrasion resistance test using a Zwick drum abrasion unit, model 6102 with 2.5 Newtons force, relative loss in mm³ | | | | |

As shown in Table 4, Tangent Delta is improved by the provision of the pre-silanized silica when comparing Comparative Example 4, Inventive Example 1 and Inventive Example 2 with Comparative Example 3. The improvement in Tangent Delta indicates a low hysteresis and thus improved rolling resistance. However, at the same time, Comparative Example 4 (with pre-silanized silica) has a significantly lower stiffness indicator (G') than Comparative Example 3 (with conventional silica). Inventive Examples 1 and 2, comprising the sulfur-containing compound according to an embodiment of the present invention, have unexpectedly a higher stiffness than Comparative Example 4. In this context it is also emphasized that the stiffnesses of Inventive Examples 1 and 2 is even higher than the stiffness of Comparative Example 3, despite the use of pre-silanized silica in Inventive Examples 1 and 2.

Below Table 5 shows similar measurements as Table 4 but considering SSBR 3 instead of the same compositions with SSBR 2.

**TABLE 5**

| **Property with SSBR 3** | **Comparative Example 3** | **Comparative Example 4** | **Inventive Example 1** | **Inventive Example 2** |
|---|---|---|---|---|
| G'(1%), 1Hz [MPa] ^{a} | 1.87 | 1.54 | 1.68 | 1.76 |
| Tangent Delta (6%), 30°C ^{b} | 0.19 | 0.15 | 0.13 | 0.14 |
| Abrasion [mm³] ^{c} | 113 | 119 | 86 | 87 |

Also with a different SSBR, the results obtained according to Table 5 are similar to those observed already in Table 4. Thus, the use of pre-silanized silica improves Tangent Delta as shown by the comparison of Comparative Example 4 with Comparative Example 3. However, a drawback is the loss in stiffness and even the abrasion is negatively impacted by the use of the pre-silanized silica according to Comparative Example 4, when compared with Comparative Example 3. The additional use of the sulfur-containing compound in accordance with the embodiment of the invention results, in comparison with Comparative Example 4, surprisingly in an improvement of stiffness (as indicated by G'), hysteresis (as indicated by Tangent Delta) and abrasion. While the stiffness indicator of Inventive Examples 1 and 2 is not higher than the respective value of Comparative Example 3, Tangent Delta and abrasion have been significantly improved over Comparative Example 3.

## Claims

1. A sulfur vulcanizable rubber composition comprising:
50 phr to 100 phr of at least one styrene butadiene rubber functionalized for the coupling to silica;
0 phr to 50 phr of a diene based elastomer;
40 phr to 200 phr of a filler, wherein said filler comprises predominantly a silanized or pre-silanized silica; and
at least 0.5 phr of a sulfur-containing compound having the structure 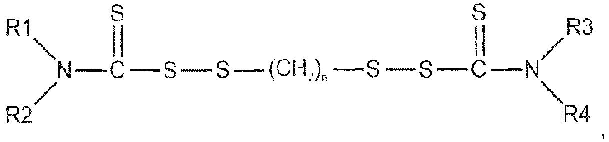
with n being an integer from 1 to 15 and with R1, R2, R3, R4 each being independently an organic group comprising 1 to 20 carbon atoms.

2. The rubber composition according to claim 1, wherein the silanized or pre-silanized silica has a BET surface area smaller than 120 g/m².

3. The rubber composition according to claim 1 or 2, wherein said silanized or pre-silanized silica is a silica which is pre-reacted with a sulfur-containing silane.

4. The rubber composition according to claim 3, wherein the sulfur-containing silane is one or more of i) a bis(3-triethoxysilylpropyl)polysulfide containing an average of from 2 to 5 connecting sulfur atoms in its polysulfidic bridge, and ii) an alkoxyorganomercaptosilane.

5. The rubber composition according to at least one of the previous claims, wherein the filler comprises from 50 phr to 150 phr of the silanized or pre-silanized silica; and/or wherein said filler comprises less than 10 phr of carbon black.

6. The rubber composition according to at least one of the previous claims, wherein the rubber composition comprises from 1 phr to 5 phr of the sulfur-containing compound; and/or wherein the rubber composition further comprises at least 5 phr of a hydrocarbon resin, preferably a hydrocarbon resin selected from the group consisting of coumarone-indene-resins, petroleum resins, C5 resins, C9 resins, C5/C9 resins, DCPD resins, CPD resins, MCPD resins, terpene resins, alphamethyl styrene resins, and combinations of those.

7. The rubber composition according to at least one of the previous claims, wherein one or more of R1, R2, R3, R4 comprise a benzyl group; and/or wherein the sulfur-containing compound has the following structure:

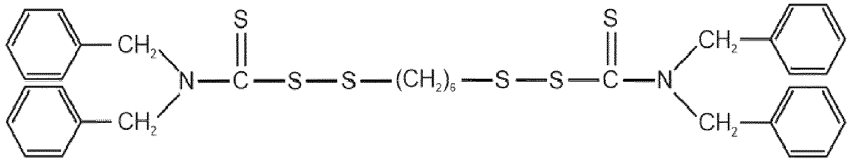

8. The rubber composition according to at least one of the previous claims, comprising less than 10 phr of liquid plasticizer.

9. The rubber composition according to at least one of the previous claims, wherein the styrene butadiene rubber has one or more of the features: i) a styrene content of less than 40%, and ii) a vinyl content within a range of 30% to 60%, and iii) a glass transition temperature within a range of -10°C to -40°C.

10. The rubber composition according to at least one of the previous claims, comprising less than 0.9 phr of sulfur.

11. The rubber composition according to at least one of the previous claims, wherein the styrene butadiene rubber has a weight average molecular weight (Mw) within a range of 200,000 g/mol to 500,000 g/mol; and/or wherein the styrene butadiene rubber functionalized for the coupling to silica has one or more groups selected from an amino group, an amino siloxane group, and an amino silane group.

12. The rubber composition according to at least one of the previous claims, comprising
70 phr to 100 phr of the styrene butadiene rubber, and
0 phr to 30 phr of one or more of polybutadiene rubber, polyisoprene, and natural rubber.

13. A rubber component for a tire comprising the rubber composition according to at least one of the previous claims.

14. A tire comprising a rubber component, preferably a tread, with the rubber composition according to at least one of the claims 1 to 12 in a vulcanized form.

15. A method of making a rubber composition, the method comprising:
a) silanizing silica with at least one silane so as to obtain a silanized or pre-silanized silica;
b) adding the silanized silica to at least one styrene butadiene rubber functionalized for the coupling to silica, and optionally to at least one further diene based elastomer;
c) mixing the silanized or pre-silanized silica with the at least one styrene butadiene rubber functionalized for the coupling to silica, and optionally the further diene based elastomer;
d) adding one or more of plasticizers, processing aids, antidegradants and waxes;
e) adding elemental sulfur and optionally at least one sulfur cure accelerator.
